# EUROPEAN PATENT SPECIFICATION

(11) **EP 4 117 137 B1**
(45) Date of publication and mention of the grant of the patent: **10.04.2024**
(21) Application number: 21184187.9
(22) Date of filing: 07.07.2021
(51) Int. Cl.: H02J 7/00, H02J 9/06

(54) **METHOD FOR DETECTING THE TYPE OF AN ENERGY STORAGE DEVICE CONNECTED TO AN EMERGENCY CONVERTER**
VERFAHREN ZUR ERKENNUNG DES TYPS EINER MIT EINEM NOTSTROMWANDLER VERBUNDENEN ENERGIESPEICHERVORRICHTUNG
PROCÉDÉ DE DÉTECTION DU TYPE D'UN DISPOSITIF DE STOCKAGE D'ÉNERGIE CONNECTÉ À UN CONVERTISSEUR D'URGENCE

(43) Date of publication of application: 11.01.2023
(73) Proprietor: Tridonic GmbH & Co. KG, 6851 Dornbirn (AT)
(72) Inventor: Shukla, Jagjitpati, 6850 Dornbirn (AT); Makwana, Deepak, 6850 Dornbirn (AT)
(74) Representative: Beder, Jens

(56) References cited:
- EP-A2- 2 075 872
- US-A- 5 237 257
- US-A1- 2018 368 221
- US-A1- 2020 028 378
- US-A1- 2020 243 921

## Description

The invention is in the field of emergency lighting devices and power supply of emergency lighting devices. In particular, the invention relates to an emergency converter and a method capable of detecting the type of an energy storage device connected to the emergency converter.

In emergency light systems, converter devices (converters, ballasts, driver devices) are used for providing a supply voltage to an emergency light for a predetermined time in case mains supply fails. The voltage supply is maintained in case of a mains supply failure for a rated service time using energy stored in an energy storage device such as a rechargeable battery. The rated service time defines a battery discharge duration during which time the emergency converter is required to drive the emergency light with a predetermined drive current. The maximum possible discharge duration depends on the emergency light and the capacity of the rechargeable battery.

Different energy storage devices are used depending on the application and local applicable regulations, wherein the energy storage devices may differ with regard to the capacity, presence of protection circuits and/or sensors, employed battery chemistry and/or nominal voltage. Some of these technical specifications have an impact on operations controlled by the emergency converter, such as failure handling, charging and discharging.

Emergency converters may be designed for exclusive use with a given type of energy storage device. However, this increases the number of variants for a manufacturer, and restricts a user of an emergency lighting system to a specific type of energy storage device. Alternatively, the emergency converter can be configured to connect to and reliably operate with energy storage devices of various types.

EP 3 563 640 A1 discloses a method, in which the type of an energy storage device connected to an emergency converter is automatically detected and energy storage management parameters are set according to the detected type, wherein the emergency converter determines whether the energy storage device comprises a temperature sensor, whether the resistance value of the temperature sensor is greater than a threshold and sets first, second or third charging parameters based on the absence of the temperature sensor and the resistance value.

However, the number of types is limited and the resistance value depends on the temperature of the energy storage device. Further, the type of temperature sensor depends on the type of the energy storage device.

An emergency converter, in which all features of the preamble of claim 1 are disclosed, is described in US 2020/028378 A1.

US 2020/243921 A1 discloses an energy storage device comprising a plurality of storage modules, each of which has at least one temperature sensor string having a temperature sensor in the form of a temperature-dependent resistor for measuring the storage module temperature, and a battery control unit, which, based on the resistance values of the temperature sensor strings, determines the temperatures at the respective temperature sensors and a respective storage module type based on the measured resistance values of the temperature sensor strings.

EP 2 075 872 A2 discloses an energy storage device comprising a temperature sensor for generating a temperature signal indicating a temperature of the energy storage device, a circuit for generating a type signal indicating the type of the energy storage devices and a terminal for the output of the temperature signal and the type signal, wherein the type signal is generated in a first period and the temperature signal is generated in a second period following the first period.

It is an object of the present invention to provide an apparatus and a method, which reduce the above problems. In particular, an object of the present invention is to provide an emergency converter, an energy storage device and a method that allow to use different types of energy storage devices with low efforts and costs.

This object is achieved by an emergency converter, an energy storage device and a method according to the enclosed independent claims. Advantageous features of the present invention are defined in the corresponding dependent claims.

According to the present invention, an emergency converter comprises an energy storage interface configured to connect an energy storage device to the emergency converter and a control circuit configured to determine the type of energy storage device connected by the energy storage interface. The energy storage interface is configured to connect to energy storage devices of at least two different types to which different parameters for controlling the emergency converter are assigned, wherein the energy storage interface comprises a sensor connector to connect to a sensor circuit of the energy storage device comprising a temperature sensor for generating a temperature signal indicating a temperature of the storage devices and at least a resistor for generating a type signal indicating the type of the storage devices. The type signal is generated in a first period and the temperature signal is generated in a second period following the first period. The control circuit is configured to detect, in the first period, the type signal received by the sensor connector, to determine the type of energy storage device connected by the energy storage interface based on the detected type signal, to set at least one parameter assigned to the determined type, to detect, in the second period, the temperature signal received by the sensor connector, to determine an error of the temperature signal based on the determined type of the energy storage device, to correct the temperature signal based on the determined error, to control charging and/or discharging of the energy storage device based on the corrected temperature signal and/or to generate a warning signal when a temperature indicated by the temperature signal exceeds an upper threshold value and/or to generate the warning signal when the temperature lies below the lower threshold value.Since the type signal and the temperature signal are generated/detected at different times, the number of connectors/pins of the energy storage interface can be reduced and the type of the energy storage device can be determined very precisely and reliably even if a plurality of different resistors are assigned to a plurality of types. In addition, the sensor circuit can generate an offset of the temperature signal that depends on the different resistors assigned to the different types. As the type is determined in the first period, the offset/error can be corrected in the second period, wherein the control circuit determines and corrects the error of the temperature signal based on the determine type and a table assigning an error or a correction value/function to each of at least two different types.

The sensor circuit can be powered/controlled by the emergency converter, wherein a current source of the emergency converter outputs a current to the sensor connector and the control circuit determines the type of the energy storage device by measuring the voltage at the sensor connector and by assigning one of the at least two different types to a voltage value measured at a predetermined time after the current is output to the sensor connector or to at least one predetermined characteristic of a voltage waveform measured in a predetermined time interval after the current is output to the sensor connector.

The types of energy storage devices may differ with regard to the charging capacity, presence of protection circuits, the battery chemistry and/or nominal voltage and the at least one parameter can include at least one of charging parameters, discharging parameters and failure parameters.

The emergency converter can comprise a LED driver that is configured to supply a current to a LED lighting device and that is powered by the energy storage device in an emergency lighting mode or a test mode.

According to the present invention, an energy storage device comprises connectors configured to connect the energy storage device to an energy storage interface of an emergency converter and a sensor circuit having a temperature sensor configured to generate a temperature signal indicating a temperature of the storage devices and at least a resistor for generating a type signal indicating the type of the storage devices, wherein the circuit is connected to the connectors and is configured to generate the type signal in a first period and the temperature signal in a second period following the first period. The sensor circuit comprises a switch configured to switch-off the temperature sensor during the first period. In addition, the resistor and the temperature sensor are connected in series between two of the connectors, wherein the temperature sensor is bypassed/short-circuited by the switch during the first period.

The signal to switch-off the temperature sensor can be generated by the sensor circuit when a current/voltage is supplied to the two connectors, wherein the sensor circuit comprises a capacitor, a voltage divider connected in series between the two connectors, and the switch is controlled by a signal generated by the voltage divider. In this way, the time (first period) at which the temperature sensor is bypassed depends on the capacitor and the voltage divider. Alternatively, the switch can be controlled by a separate controlling means, such as microcontroller or application specific integrated circuit (ASIC).

The energy storage device can comprise a Lithium-ion battery, wherein the temperature sensor is configured to generate the temperature signal indicating a temperature of the Lithium-ion battery. The temperature sensor can comprise a thermistor, in particular, NTC or PTC resistor.

According to a preferred embodiment, the Lithium-ion battery is connected or connectable (by the controlling means) in parallel to first and second connectors for charging/discharging the battery, wherein the sensor circuit is connected in parallel to a third connector of the connectors and one of the first connector and the second connector. Thus only one additional connecter is necessary for transmitting the temperature signal and type signal.

According to the present invention, a method for determining a type of an energy storage device connected to an emergency converter comprises the steps of detecting a signal generated by the energy storage device and determining the type of energy storage device based on the detected signal, wherein at least two different types of energy storage devices, to which different parameters for controlling the emergency converter are assigned, can be connected to the emergency converter. The signal is generated by a sensor circuit of the energy storage device comprising a temperature sensor for generating a temperature signal indicating a temperature of the storage device and at least a resistor for generating a type signal indicating the type of the storage devices. The type signal is generated in a first period and the temperature signal is generated in a second period following the first period, wherein in the detecting step, the type signal is detected in the first period and in the determining step, the type of energy storage device is determined based on the type signal. In addition, the method comprises the steps of detecting, in the second period, the temperature signal received by the sensor connector, determining an error of the temperature signal based on the determined type of the energy storage device, correcting the temperature signal based on the determined error, and controlling charging and/or discharging of the energy storage device based on the corrected temperature signal and/or generating a warning signal when a temperature indicated by the temperature signal exceeds an upper threshold value and/or generating the warning signal when the temperature lies below the lower threshold value.

In the detecting step, a current can be supplied by the emergency converter to the sensor circuit of the energy storage device, wherein in the determining step, the type of the energy storage device is determined by measuring voltage at the sensor circuit and by assigning one of the at least two different types to a voltage value measured at a predetermined time after the current is supplied to the sensor circuit or to at least one predetermined characteristic of a voltage waveform measured in a predetermined time interval after the current is supplied to the sensor circuit.

The resistor and the temperature sensor can be connected in series, wherein in the detecting step, the temperature sensor is bypassed by a switch connected in parallel to the temperature sensor.

Embodiments of the invention are discussed in detail with reference to the enclosed figures, in which
- Fig. 1: shows a simplified block diagram of parts of an emergency light system with an energy storage device and an emergency converter according to an embodiment,
- Fig. 2: shows the sensor circuit of the energy storage device and the current generating circuit of the emergency converter shown in Fig. 1,
- Fig. 3: shows a diagram of signals indicating different types of energy storage devices,
- Fig. 4: shows a table for determining the type of energy storage device connected to the emergency converter shown in Fig. 1, and
- Fig. 5: shows a flowchart for a method for determining the type of energy storage device connected to the emergency converter according to an embodiment.

In the figures, all voltages are based on a common reference potential (GND) and same reference numbers denote same or equivalent structures. The explanation of structures with same reference numbers in different figures is avoided where deemed possible for sake of conciseness.

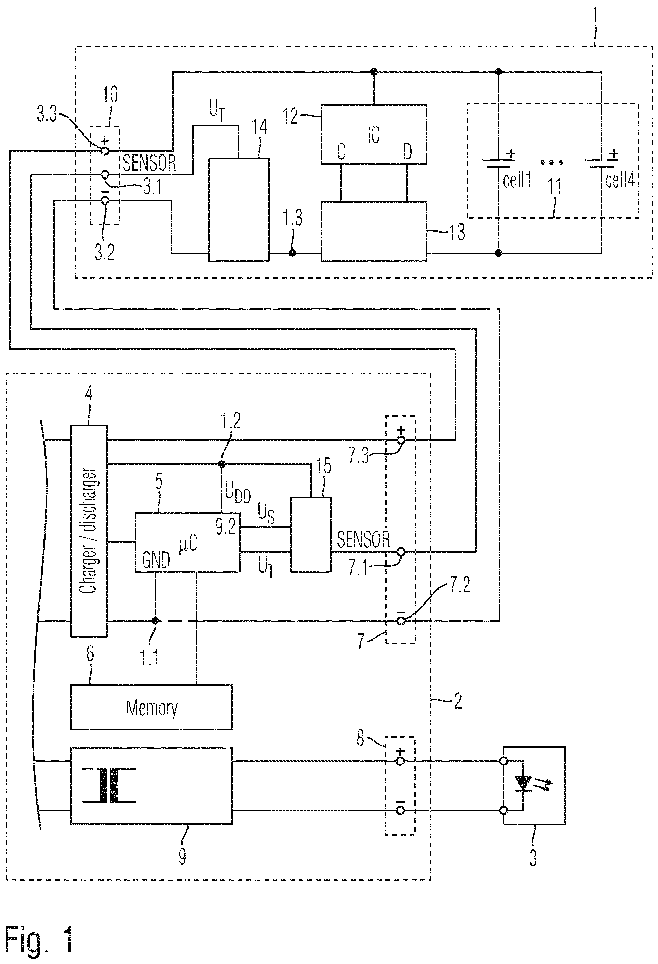

Fig. 1 shows an emergency lighting system with an energy storage device 1, an emergency converter 2 detachably connected to the energy storage device 1 and a LED lighting device 3 detachably connected to the emergency converter 2 according to an embodiment. The parts shown in Fig. 1 can be housed in an emergency light.

The emergency converter 2 comprises a charger/discharger circuitry 4, a control circuit 5 for controlling the charger/discharger circuitry 4, a memory 6 storing charging, discharging and failure parameters and information (table) for determining the type of the energy storage device 1, an energy storage interface 7, a light device interface 8 and a LED driver 9 for generating a LED drive current, which is output via light device interface 8 to the LED lighting device 3. The LED lighting device 3 fed with the LED light current emits light from one or more LEDs.

The emergency converter 2 is fed from mains supply (not shown) in case of normal operations when mains supply is available. In case of a mains failure, malfunction or functional test, the emergency converter 2 is provided with electric energy from the energy storage device 1 via the charger/discharger circuitry 4. For the invention the structure of the charger/discharger circuitry 4, the LED driver 9, the light device interface 8 and the LED lighting device 3 are not essential for understanding the invention and may be of any known structure used in conjunction with emergency converters 2 for emergency lighting applications. The charger/discharger circuitry 4 must only be capable to adapt its settings or to operate based on an input signal of the control circuit 5.

Emergency lighting and standard lighting may for example share components. For example, the same LED lighting device 3 or the same LED driver 9 may be used for a conventional lighting mode as well as for the emergency lighting mode (maintained lighting mode).

The energy storage interface 7 and the energy storage device 1 are connected by two power supply lines and a sensor line, wherein the energy storage interface 7 comprises two electrical connectors 7.2, 7.3 for connecting the power supply lines, shown in Fig. 1 as a first positive connecting line (+) and a second negative connecting line (-), and an electrical connector 7.1 for connecting the sensor line.

The energy storage device 1 comprises an interface 10 for connecting the power supply lines and the sensor line, a Lithium-ion battery 11 formed of a plurality of cells, an integrated circuit (IC) 12, a protecting/switching circuit 13 controlled by the integrated circuit (IC) 12 and a sensor circuit 14 for detecting the temperature of the Lithium-ion battery 11. The protecting/switching circuit 13 and the integrated circuit (IC) 12 are optional, wherein the integrated circuit (IC) 12 is configured to detect short-circuit, over-charge and/or over-discharge and to control the protecting/switching circuit 13 to disconnect/protect the Lithium-ion battery 11 when short-circuit, over-charge and/or over-discharge is detected.

The power supply lines connect an electrical connector 3.2 of the interface 10 to the electrical connector 7.2 and an electrical connector 3.3 of the interface 10 to the electrical connector 7.3 and the sensor line connects an electrical connector 3.1 of the interface 10 to the electrical connector 7.1. The electrical connectors 3.1., 3.2 and 3.3 of the interface 10 and/or the electrical connectors 7.1, 7.2 and 7.3 of the energy storage interface 7 can be screw or spring terminals, to which the sensor line and the power supply lines are connectable. Alternatively, the lines may be soldered to the interface 10 and/or the energy storage interface 7.

The emergency converter 2 can be operated with different energy storage devices 1, which differ in their charging capacity. The capacity of the energy storage device 1 connected to the energy storage interface 7 is determined based on a type signal generated by the sensor circuit 14. The emergency converter 2 comprises a current generating circuit 15 to supply a current to the sensor circuit 14 based on which the sensor circuit 14 generates the type signal.

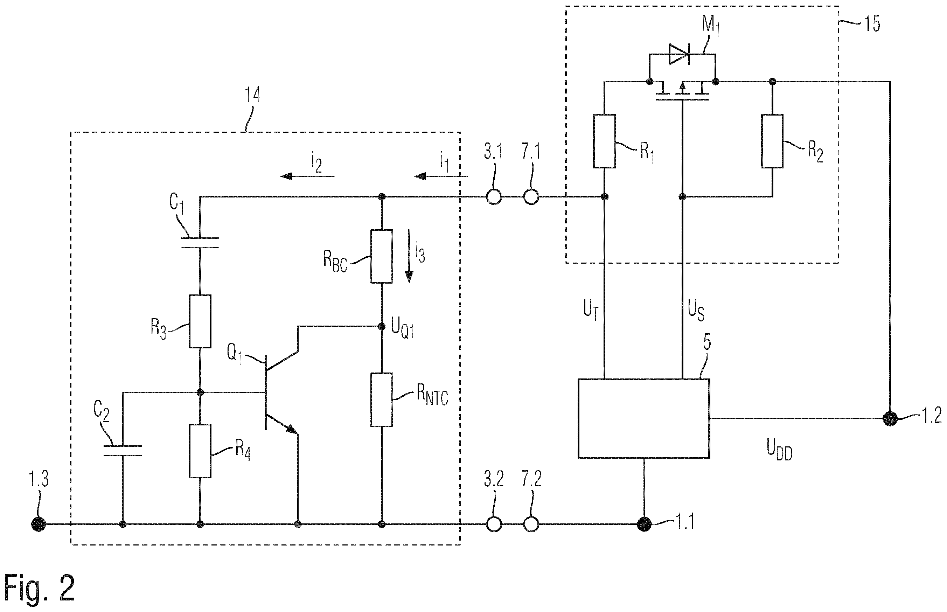

Fig. 2 shows the sensor circuit 14 and the current generating circuit 15 connected by the negative connecting line (GND) and the sensor line. The current generating circuit 15 generates a current i₁ by a non-ideal current source formed of a voltage source (supply voltage U_{DD}) in series with a resistor R₁, supplies the current i₁ to the sensor circuit 14 via the electrical connector 7.1 and outputs a signal (voltage U_{T}) that is generated by the sensor circuit 14 and received via the electrical connectors 7.1 to the control circuit 5. The control circuit 5 controls the generation of the current i₁, wherein the current generating circuit 15 comprises a switch M₁ in series with the resistor R₁, which is controlled by a signal Us generated by the control circuit 5.

The sensor circuit 14 comprises a resistor R_{BC} and a resistor R_{NTC} connected in series to the electrical connectors 3.1 and 3.2, a switch Q₁ connected in parallel to the resistor R_{NTC} and a circuit that is formed by a capacitor C₁, a resistor R₃, a resistor R₄ and an optional capacitor C₂. The circuit is configured to turn the switch Q₁ on and off at predetermined times after the current i₁ is supplied to the sensor circuit 14. The switch Q₁ is a transistor, wherein the capacitor C₁ and the resistor R₃ are connected in series to the electrical connector 3.1 and the base of the transistor, the capacitor C₂ and the resistor R₄ are connected in parallel to the base of the transistor and the electrical connector 3.2, the collector is connected to a circuit point (U_{Q1}) between the resistor R_{BC} and the resistor R_{NTC} and the emitter is connected to the electrical connector 3.2.

The resistor R_{NTC} is a temperature sensor positioned in the energy storage device 1 to detect the temperature of the Lithium-ion battery 11 (not shown in Fig. 2), wherein the resistance value of the resistor R_{NTC} decreases with increasing temperature. The resistor R_{BC} is selected to indicate the type of the energy storage device 1, wherein the resistance value of the resistor R_{BC} is assigned to the battery capacity of the Lithium-ion battery 11. At the time the switch Q₁ is off, the type signal generated by resistor R_{BC} is superimposed on the temperature signal generated by the resistor R_{NTC} so that voltage U_{T} depends on the temperature and the type of the energy storage device 1. In order to generate and detect the type signal only, the switch Q₁ bypasses the resistor R_{NTC} at a limited period and the control circuit 5 detects the type signal in this period after the switch M1 has been turned on.

The control circuit 5 turns on the switch M1 at each time the energy storage device 1 is connected to the emergency converter 2, and/or the emergency converter 2 is connected to the mains supply. When the switch M1 is turned on, current i₃ flows through the circuit formed by the capacitor C₁, the resistor R₃, the resistor R₄ and the optional capacitor C₂. This produces a voltage across the resistor R₄, which drives the base-emitter junction of the switch Q₁ (transistor) so that the switch Q₁ turns on. As the current i₃ through the capacitor C₁ decays exponentially, the switch M1 is turned off. The capacitor C₁, the resistor R₃ and the resistor R₄ are dimensioned so that the switch Q₁ turns on, for example, at least 150ms. The capacitor C₂ causes an optional switch-on delay.

The voltage U_{T} produced at the connector 3.1 (temperature sense pin of the energy storage device 1) is a function of the resistors R₁ and R_{BC} and the time constant governed by the circuit formed by the capacitors C₁ and C₂ and the resistors R₃ and R₄.

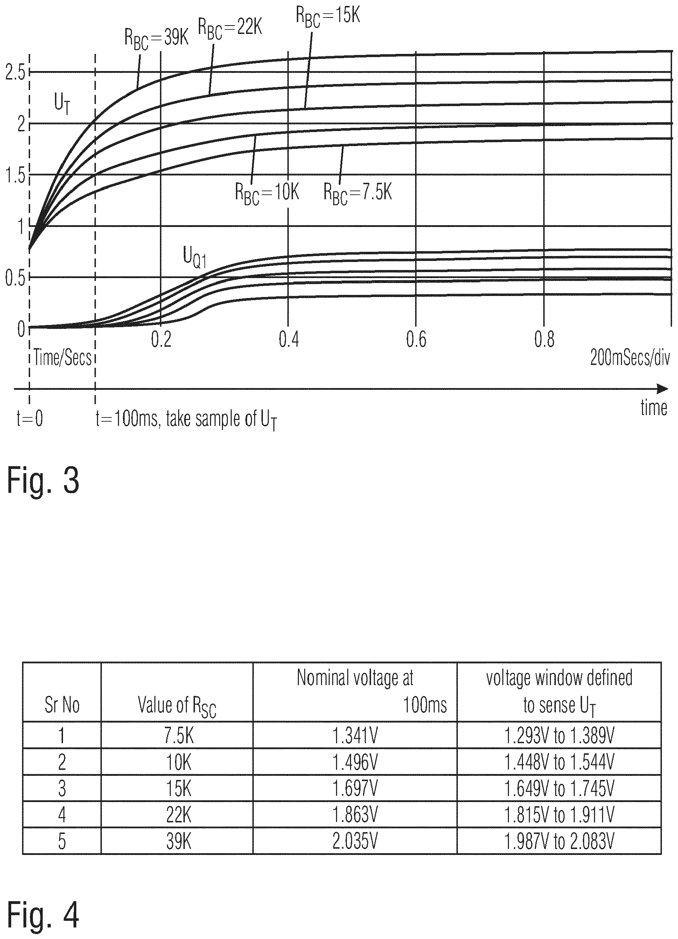

Fig. 3 shows in a diagram the waveforms of voltage U_{T} for different values of the resistor R_{BC} and the values of voltage U_{Q1} across the switch Q₁ to judge the time for which the switch Q₁ remains on. In Fig. 3, one of five different values 7.5K, 10K, 15K, 22K and 39K is selected for the resistor R_{BC} to indicated one of the five different values of battery capacities 1 x 1.5Ahr, 2 x 1.5Ahr, 3 x 1.5Ahr, 4 x 1.5 Ahr and 5 x 1.5Ahr. Alternatively or in addition, the presence of protection circuits (the integrated circuit 12 and the protecting/switching circuit 13) and/or type of temperature sensor (NTC or PTC), employed battery chemistry and/or nominal voltage can be indicated by the different values of the resistor R_{BC}. As shown in Fig. 3, the voltage U_{T} produced at the connector 3.1 rises exponentially, the control circuit 5 takes a sample of the voltage U_{T} (dashed line) 100ms after the switch M₁ was turned on by the control circuit 5, assigns the sample to one of the resistor values based on a table shown in Fig. 4.

In the table shown in Fig. 4, voltage level window with +/-48mV margin around the nominal value is defined for each value of the resistor R_{BC} and the control circuit 5 assigns a sample of, for example, 1,3V to the nominal value of 1,341V and the resistor value of 7,5K and sets the charging, discharging and/or failure parameters assigned to the nominal value of 1,341V or the resistor value of 7,5K. Since, the nominal values and the resistor values are not relevant for the parameters to be set by the control circuit 5, the table can directly assign the respective parameters to each voltage level window. The table can be stored in the memory 6.

As time progresses (first period), a steady state is reached when the value of current i₂ reaches zero and switch Q₁ turns off. Steady state is reached approximately at 1,5 seconds after switch M₁ was turned on. At this stage switch Q₁ is off, the voltage U_{T} at the connector 3.1 is a function of resistors R₁, R_{BC} and R_{NTC} and the control circuit 5 can determine the temperature of the Lithium-ion battery 11 based of the detected voltage U_{T} (temperature signal) as a continuous battery temperature monitor.

When the resistor R_{BC} is determined based on the table shown in Fig. 4, influence of the resistor R_{BC} on the temperature signal can be determined and eliminated. Alternatively, the resistor R_{BC} can be bypassed by another switch Q₁ after the value of the resistor R_{BC} or the nominal voltage is determined, or a compensation resistor R_{C} can be added in series to the resistor R_{NTC}, wherein the compensation resistor R_{C} and the resistor R_{NTC} are bypassed by the switch Q₁ and the value of the compensation resistor R_{C} is designed so that the sums of the compensation resistor R_{C} and the resistor R_{BC} always result in a constant value independent on the value of the resistor R_{BC} assigned to the respective type, e.g.: Rc = 39K - R_{BC} or Rc = R_{BC_max} - R_{BC}.

The control circuit 5 and/or the integrated circuit 12 can be a microcontroller or application specific integrated circuit (ASIC). The energy storage device 1 can be a Li-ion cell type energy storage device or a NiMH cell type energy storage device. The memory 6 can store two or more sets of energy storage management parameters, each associated with at least one type of energy storage device 1 and the control circuit 5 can control the charger/discharger circuitry 4 to read, from the memory 6, the set assigned to the determined type of energy storage device 1 or controls the charger/discharger circuitry 4 based on the set of parameters.

The energy storage management parameters may include charging parameters such as a load current, a load voltage, different voltage or current levels.

The energy storage management parameters may include selecting a suitable battery management algorithm, for example constant current algorithm, permanent or intermittent charge algorithm or permanent or intermittent charge and constant current followed by a constant voltage particularly suitable Li-ion cell chemistry.

The energy storage management parameter may include selecting a suitable charging methodology, for example charge termination or charge reduction based upon a timed algorithm such as NiCd. In case of NiMH, charging reduction based on a negative dV /dt may be set as energy storage parameter with respect to the charge methodology. In Li-ion type cells chemistry, voltage charging termination may be set as charging methodology.

The energy storage management parameters may include selecting a suitable discharge current, for example a higher discharge current for the mostly in parallel connected Li-ion cells instead of the NiCd or NiMH cells usually arranged in series.

The energy storage management parameters may include failure parameters and thresholds in dependence of the respective type of energy storage device 1 and its cell chemistry. The energy storage management parameters may include in this respect at least one of a gassing voltage level threshold, an open circuit battery threshold and a minimum battery voltage level for a fully charged energy storage device 1.

The energy storage management parameters may include end of charge limit, in particular a low voltage battery cut off limit (LVBCO) in dependence of the respective type of energy storage device 1.

The energy storage management parameters may enable an energy storage device communication function for communicating with the LED converter 9, in particular in case of a Li-ion type energy storage device 1 which may include an integrated circuit for implementing some battery pack intelligence functions.

The energy storage management parameters may include a pre-recorded parameter set applicable to the specific energy storage device 1 with its determined cell chemistry.

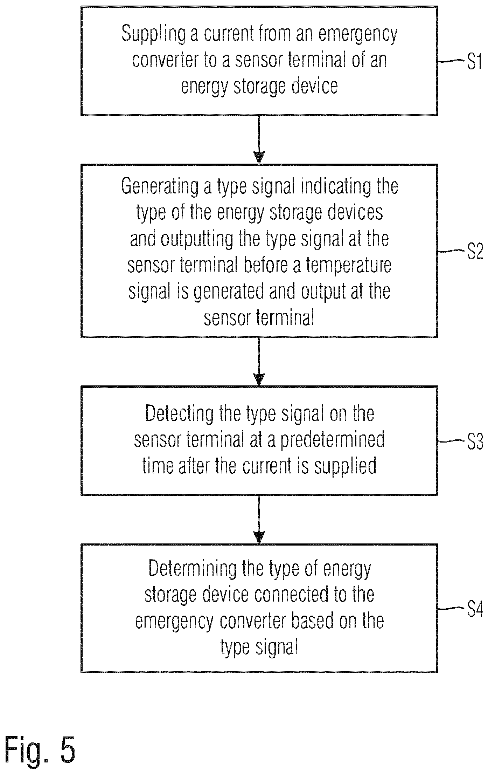

Fig. 5 shows a very simplistic flowchart showing the single steps performed by the method described in detail above. In step S1, the current generating circuit 15 generates the current i₁ and supplies the current i₁ to the sensor circuit 14 via the electrical connectors 7.1. In step S2, the type signal (voltage U_{T}) is generated by the sensor circuit 14 and output to the control circuit 5 via the electrical connectors 7.1. The control circuit 5 detects the type signal at a predetermined time after the current i₁ is supplied to the sensor circuit 14 in step S3 and determines the type of energy storage device 1 based on the type signal in step S4. The method of Fig. 5 is run every time an energy storage device 1 is connected to the emergency converter 2
and/or the emergency converter 2 is connected/switched to mains supply.

## Claims

1. An emergency converter comprising
an energy storage interface (7) configured to connect an energy storage device (1) to the emergency converter (2), wherein the energy storage interface (7) is configured to connect to energy storage devices (1) of at least two different types to which different parameters for controlling the emergency converter (2) are assigned; and
a control circuit (5) configured to determine the type of an energy storage device (1) connected to the energy storage interface (7) and to set at least one parameter assigned to the determined type,
the energy storage interface (7) comprises a sensor connector (7.1) to connect to a sensor circuit (14) of the energy storage device (1) comprising a temperature sensor (R_{NTC}) for generating a temperature signal indicating a temperature of the energy storage device (1) and at least a resistor (R_{BC}) for generating a type signal indicating the type of the energy storage devices (1); and
the control circuit (5) is configured to detect the type signal received by the sensor connector (7.1), to determine the type of energy storage device (1) connected by the energy storage interface (7) based on the detected type signal, to detect the temperature signal received by the sensor connector (7.1), to control charging and/or discharging of the energy storage device (1) based on the detected temperature signal **characterized in that**
the type signal is generated in a first period and the temperature signal is generated in a second period following the first period;
the control circuit (5) is further configured to detect the type signal received by the sensor connector (7.1) in the first period, to detect the temperature signal received by the sensor connector in the second period, to determine an error of the temperature signal based on the determined type of the energy storage device (1), to correct the temperature signal based on the determined error, to control charging and/or discharging of the energy storage device (1) based on the corrected temperature signal and/or to generate a warning signal when a temperature indicated by the temperature signal exceeds an upper threshold value to generate the warning signal when the temperature lies below the lower threshold value.

2. The emergency converter according to claim 1, further comprising
a current source (15) configured to output a current to the sensor connector (7.1); wherein
the control circuit (5) is configured to determine the type of the energy storage device (1) by measuring the voltage at the sensor connector (7.1) and by assigning one of the at least two different types to a voltage value measured at a predetermined time after the current is output to the sensor connector (7.1) or to at least one predetermined characteristic of a voltage waveform measured in a predetermined time interval after the current is output to the sensor connector (7.1).

3. The emergency converter according to any one of the preceding claims, wherein
the at least one parameter includes at least one of charging parameters, discharging parameters and failure parameters.

4. The emergency converter according to any one of the preceding claims, further comprising
an LED driver (9) configured to supply a current to an LED lighting device (3), wherein the LED driver (9) is powered by the energy storage device (1) in an emergency lighting mode or a test mode.

5. An energy storage device comprising
connectors (3.1, 3.2, 3.3) configured to connect the energy storage device (1) to an energy storage interface (7) of an emergency converter (2); and
a temperature sensor (R_{NTC}) configured to generate a temperature signal indicating a temperature of the energy storage devices (1),
a sensor circuit (14) comprising the temperature sensor (R_{NTC}) and at least a resistor (R_{BC}) for generating a type signal indicating the type of the energy storage devices (1), wherein the sensor circuit (14) is connected to the connectors (3.1, 3.2, 3.3) and is configured to generate the type signal in a first period and the temperature signal in a second period following the first period, wherein
the sensor circuit (14) comprises a switch (Q₁) configured to switch-off the temperature sensor (R_{NTC}) during the first period, and
the resistor (R_{BC}) and the temperature sensor (R_{NTC}) are connected in series between two of the connectors (3.1, 3.2, 3.3) and the temperature sensor (R_{NTC}) is bypassed by the switch (Q₁) during the first period.

6. The energy storage device according to claim 5, wherein
the sensor circuit (14) comprises a capacitor (C₁) and a voltage divider (R₃, R₄) connected in series between the two connectors (3.1, 3.2) and the switch (Q₁) is controlled by a signal generated by the voltage divider (R₃, R₄).

7. The energy storage device according to any one of claims 5 and 6, further comprising
a Lithium-ion battery (11), wherein
the temperature sensor (R_{NTC}) is configured to generate the temperature signal indicating a temperature of the Lithium-ion battery (11).

8. The energy storage device according to claim 7, wherein
the Lithium-ion battery (11) is connected or connectable in parallel to a first connector (3.2) and a second connector (3.3) of the connectors (3.1, 3.2, 3.3), and
the sensor circuit is connected in parallel to a third connector (3.1) of the connectors and one of the first connector (3.2) and the second connector (3.3).

9. A method for determining a type of an energy storage device (1) connected to an emergency converter (2), wherein at least two different types of energy storage devices, to which different parameters for controlling the emergency converter (2) are assigned, can be connected to the emergency converter (2), the method comprising the steps of:
detecting (S1..S3) a signal generated by the energy storage device (1); and
determining (S4) the type of energy storage device (1) based on the detected signal,
the signal is generated by a sensor circuit (14) of the energy storage device (1) comprising a temperature sensor (R_{NTC}) for generating a temperature signal indicating a temperature of the energy storage device (1) and at least a resistor (R_{BC}) for generating a type signal indicating the type of the energy storage devices (1), wherein the type signal is generated in a first period and the temperature signal is generated in a second period following the first period;
in the detecting step (S1..S3), the type signal is detected in the first period; and
in the determining step (S4), the type of energy storage device (1) is determined based on the type signal, wherein the method further comprises the steps of
detecting, in the second period, the temperature signal received by the sensor connector (7.1),
determining an error of the temperature signal based on the determined type of the energy storage device (1),
correcting the temperature signal based on the determined error, and
controlling charging and/or discharging of the energy storage device (1) based on the corrected temperature signal and/or generating a warning signal when a temperature indicated by the temperature signal exceeds an upper threshold value and/or generating the warning signal when the temperature lies below the lower threshold value.

10. The method according to claim 9, wherein
in the detecting step (S1..S3), a current is supplied by the emergency converter (1) to the sensor circuit (14) of the energy storage device (1); and
in the determining step (S4), the type of the energy storage device (1) is determined by measuring voltage generated by the sensor circuit (14) and by assigning one of the at least two different types to a voltage value measured at a predetermined time after the current is supplied to the sensor circuit (14) or to at least one predetermined characteristic of a voltage waveform measured in a predetermined time interval after the current is supplied to the sensor circuit (14).

11. The method according to claim 10, wherein
the resistor (R_{BC}) and the temperature sensor (R_{NTC}) are connected in series; and
in the detecting step (S1..S3), the temperature sensor (R_{NTC}) is bypassed by a switch (Q₁) connected in parallel to the temperature sensor (R_{NTC}).

## Patentansprüche

1. Notfallwandler, umfassend
eine Energiespeicherschnittstelle (7), die konfiguriert ist, um eine Energiespeichervorrichtung (1) mit dem Notfallwandler (2) zu verbinden, wobei die Energiespeicherschnittstelle (7) konfiguriert ist, um mit Energiespeichervorrichtungen (1) von mindestens zwei unterschiedlichen Typen zu verbinden, denen unterschiedliche Parameter zum Steuern des Notfallwandlers (2) zugeordnet sind; und
eine Steuerschaltung (5), die konfiguriert ist, um den Typ einer Energiespeichervorrichtung (1) zu bestimmen, die mit der Energiespeicherschnittstelle (7) verbunden ist, und mindestens einen dem bestimmten Typ zugeordneten Parameter einzustellen,
die Energiespeicherschnittstelle (7) einen Sensoranschluss (7.1) umfasst, um mit einer Sensorschaltung (14) der Energiespeichervorrichtung (1) zu verbinden, umfassend einen Temperatursensor (R_{NTC}) zum Erzeugen eines Temperatursignals, das eine Temperatur der Energiespeichervorrichtung (1) angibt, und mindestens einen Widerstand (R_{BC}) zum Erzeugen eines Typsignals, das den Typ der Energiespeichervorrichtungen (1) angibt; und
die Steuerschaltung (5) konfiguriert ist, um das von dem Sensoranschluss (7.1) empfangene Typsignal zu erfassen, den Typ der Energiespeichervorrichtung (1) zu bestimmen, die durch die Energiespeicherschnittstelle (7) basierend auf dem erfassten Typsignal verbunden ist, um das von dem Sensoranschluss (7.1) empfangene Temperatursignal zu erfassen, um das Laden und/oder Entladen der Energiespeichervorrichtung (1) basierend auf dem erfassten Temperatursignal zu steuern,
**dadurch gekennzeichnet, dass** das Typsignal in einem ersten Zeitraum erzeugt wird und das Temperatursignal in einem zweiten Zeitraum nach dem ersten Zeitraum erzeugt wird; die Steuerschaltung (5) ferner konfiguriert ist, um das vom Sensoranschluss (7.1) in dem ersten Zeitraum empfangene Typsignal zu erfassen, das von dem Sensoranschluss in dem zweiten Zeitraum empfangene Temperatursignal zu erfassen, um einen Fehler des Temperatursignals basierend auf dem bestimmten Typ der Energiespeichervorrichtung (1) zu bestimmen, um das Temperatursignal basierend auf dem bestimmten Fehler zu korrigieren, um das Laden und/oder Entladen der Energiespeichervorrichtung (1) basierend auf dem korrigierten Temperatursignal zu steuern und/oder ein Warnsignal zu erzeugen, wenn eine durch das Temperatursignal angegebene Temperatur einen oberen Schwellenwert überschreitet, um das Warnsignal zu erzeugen, wenn die Temperatur unterhalb des unteren Schwellenwerts liegt.

2. Notfallwandler nach Anspruch 1, ferner umfassend
eine Stromquelle (15), die konfiguriert ist, um einen Strom an den Sensoranschluss (7.1) auszugeben; wobei
die Steuerschaltung (5) konfiguriert ist, um den Typ der Energiespeichervorrichtung (1) durch Messen der Spannung an dem Sensoranschluss (7.1) und durch Zuordnen eines der mindestens zwei unterschiedlichen Typen zu einem Spannungswert, der zu einer vorbestimmten Zeit gemessen wird, nachdem der Strom an den Sensoranschluss (7.1) ausgegeben wurde, oder zu mindestens einer vorbestimmten Charakteristik einer Spannungswellenform, die in einem vorbestimmten Zeitintervall gemessen wird, nachdem der Strom an den Sensoranschluss (7.1) ausgegeben wurde, zu bestimmen.

3. Notfallwandler nach einem der vorstehenden Ansprüche, wobei
der mindestens eine Parameter mindestens eines von Ladeparametern, Entladeparametern und Fehlerparametern einschließt.

4. Notfallwandler nach einem der vorstehenden Ansprüche, ferner umfassend
einen LED-Treiber (9), der konfiguriert ist, um einer LED-Beleuchtungsvorrichtung (3) einen Strom zuzuführen, wobei der LED-Treiber (9) durch die Energiespeichervorrichtung (1) in einem Notbeleuchtungsmodus oder einem Testmodus mit Strom versorgt wird.

5. Energiespeichervorrichtung, umfassend
Anschlüsse (3.1, 3.2, 3.3), die konfiguriert sind, um die Energiespeichervorrichtung (1) mit einer Energiespeicherschnittstelle (7) eines Notfallwandlers (2) zu verbinden; und
einen Temperatursensor (R_{NTC}), der konfiguriert ist, um ein Temperatursignal zu erzeugen, das eine Temperatur der Energiespeichervorrichtungen (1) angibt,
eine Sensorschaltung (14), umfassend den Temperatursensor (R_{NTC}) und mindestens einen Widerstand (R_{BC}) zum Erzeugen eines Typsignals, das den Typ der Energiespeichervorrichtungen (1) angibt, wobei die Sensorschaltung (14) mit den Anschlüssen (3.1, 3.2, 3.3) verbunden ist und konfiguriert ist, um das Typsignal in einem ersten Zeitraum und das Temperatursignal in einem zweiten Zeitraum nach dem ersten Zeitraum zu erzeugen, wobei
die Sensorschaltung (14) einen Schalter (Q₁) umfasst, der konfiguriert ist, um den Temperatursensor (R_{NTC}) während des ersten Zeitraums auszuschalten, und
der Widerstand (R_{BC}) und der Temperatursensor (R_{NTC}) zwischen zwei der Anschlüsse (3.1, 3.2, 3.3) in Reihe geschaltet sind und der Temperatursensor (R_{NTC}) durch den Schalter (Q₁) während des ersten Zeitraums umgangen wird.

6. Energiespeichervorrichtung nach Anspruch 5, wobei
die Sensorschaltung (14) einen Kondensator (C₁) und einen Spannungsteiler (R₃, R₄) umfasst, die zwischen den beiden Anschlüssen (3.1, 3.2) in Reihe geschaltet sind, und der Schalter (Q₁) durch ein Signal gesteuert wird, das von dem Spannungsteiler (R₃, R₄) erzeugt wird.

7. Energiespeichervorrichtung nach einem der Ansprüche 5 und 6, ferner umfassend
eine Lithium-Ionen-Batterie (11), wobei
der Temperatursensor (R_{NTC}) konfiguriert ist, um das Temperatursignal zu erzeugen, das eine Temperatur der Lithium-Ionen-Batterie (11) angibt.

8. Energiespeichervorrichtung nach Anspruch 7, wobei
die Lithium-Ionen-Batterie (11) mit einem ersten Anschluss (3.2) und einem zweiten Anschluss (3.3) der Anschlüsse (3.1, 3.2, 3.3) parallel geschaltet ist oder geschaltet werden kann und die Sensorschaltung mit einem dritten Anschluss (3.1) der Anschlüsse und einem von dem ersten Anschluss (3.2) und dem zweiten Anschluss (3.3) parallel geschaltet ist.

9. Verfahren zum Bestimmen eines Typs einer Energiespeichervorrichtung (1), die mit einem Notfallwandler (2) verbunden ist, wobei mindestens zwei verschiedene Typen von Energiespeichervorrichtungen, denen unterschiedliche Parameter zum Steuern des Notfallwandlers (2) zugeordnet sind, mit dem Notfallwandler (2) verbunden werden können, das Verfahren umfassend die Schritte:
Erfassen (S1..S3) eines von der Energiespeichervorrichtung (1) erzeugten Signals; und
Bestimmen (S4) des Typs der Energiespeichervorrichtung (1) basierend auf dem erfassten Signal,
wobei das Signal von einer Sensorschaltung (14) der Energiespeichervorrichtung (1) erzeugt wird, umfassend einen Temperatursensor (R_{NTC}) zum Erzeugen eines Temperatursignals, das eine Temperatur der Energiespeichervorrichtung (1) angibt, und mindestens einen Widerstand (R_{BC}) zum Erzeugen eines Typsignals, das den Typ der Energiespeichervorrichtungen (1) angibt, wobei das Typsignal in einem ersten Zeitraum erzeugt wird und das Temperatursignal in einem zweiten Zeitraum nach dem ersten Zeitraum erzeugt wird;
wobei in dem Erfassungsschritt (S1..S3) das Typsignal in dem ersten Zeitraum erfasst wird; und
in dem Bestimmungsschritt (S4) der Typ der Energiespeichervorrichtung (1) basierend auf dem Typsignal bestimmt wird, wobei das Verfahren ferner die Schritte umfasst
Erfassen, in dem zweiten Zeitraum, des von dem Sensoranschluss (7.1) empfangenen Temperatursignals,
Bestimmen eines Fehlers des Temperatursignals basierend auf dem bestimmten Typ der Energiespeichervorrichtung (1),
Korrigieren des Temperatursignals basierend auf dem bestimmten Fehler, und
Steuern des Ladens und/oder Entladens der Energiespeichervorrichtung (1) basierend auf dem korrigierten Temperatursignal und/oder Erzeugen eines Warnsignals, wenn eine von dem Temperatursignal angegebene Temperatur einen oberen Schwellenwert überschreitet und/oder Erzeugen des Warnsignals, wenn die Temperatur unterhalb des unteren Schwellenwerts liegt.

10. Verfahren nach Anspruch 9, wobei
in dem Erfassungsschritt (S1..S3) ein Strom von dem Notfallwandler (1) der Sensorschaltung (14) der Energiespeichervorrichtung (1) zugeführt wird; und
in dem Bestimmungsschritt (S4) der Typ der Energiespeichervorrichtung (1) durch Messen einer von der Sensorschaltung (14) erzeugten Spannung und Zuordnen eines der mindestens zwei unterschiedlichen Typen zu einem Spannungswert, der zu einer vorbestimmten Zeit gemessen wird, nachdem der Strom der Sensorschaltung (14) zugeführt wurde, oder zu mindestens einer vorbestimmten Charakteristik einer Spannungswellenform, die in einem vorbestimmten Zeitintervall gemessen wird, nachdem der Strom der Sensorschaltung (14) zugeführt wurde.

11. Verfahren nach Anspruch 10, wobei
der Widerstand (R_{BC}) und der Temperatursensor (R_{NTC}) in Reihe geschaltet sind; und
in dem Erfassungsschritt (S1..S3) der Temperatursensor (R_{NTC}) durch einen Schalter (Q₁) umgangen wird, der mit dem Temperatursensor (R_{NTC}) parallel geschaltet ist.

## Revendications

1. Convertisseur d'urgence comprenant
une interface de stockage d'énergie (7) configurée pour connecter un dispositif de stockage d'énergie (1) au convertisseur d'urgence (2), dans lequel l'interface de stockage d'énergie (7) est configurée pour se connecter à des dispositifs de stockage d'énergie (1) d'au moins deux types différents auxquels différents paramètres destinés à commander le convertisseur d'urgence (2) sont attribués ; et
un circuit de commande (5) configuré pour déterminer le type d'un dispositif de stockage d'énergie (1) connecté à l'interface de stockage d'énergie (7) et pour régler au moins un paramètre attribué au type déterminé,
l'interface de stockage d'énergie (7) comprend un connecteur de capteur (7.1) pour se connecter à un circuit de capteur (14) du dispositif de stockage d'énergie (1) comprenant un capteur de température(R_{NTC}) destiné à générer un signal de température indiquant une température du dispositif de stockage d'énergie (1) et au moins une résistance (R_{BC}) destiné à générer un signal de type indiquant le type des dispositifs de stockage d'énergie (1) ; et
le circuit de commande (5) est configuré pour détecter le signal de type reçu par le connecteur de capteur (7.1), pour déterminer le type de dispositif de stockage d'énergie (1) connecté par l'interface de stockage d'énergie (7) sur la base du signal de type détecté, pour détecter le signal de température reçu par le connecteur de capteur (7.1), afin de commander la charge et/ou la décharge du dispositif de stockage d'énergie (1) sur la base du signal de température détecté
**caractérisé en ce que**
le signal de type est généré dans une première période et le signal de température est généré dans une seconde période suivant la première période ; le circuit de commande (5) est en outre configuré pour détecter le signal de type reçu par le connecteur de capteur (7.1) dans la première période, pour détecter le signal de température reçu par le connecteur de capteur dans la seconde période, pour déterminer une erreur du signal de température sur la base du type déterminé du dispositif de stockage d'énergie (1), pour corriger le signal de température sur la base de l'erreur déterminée, pour commander la charge et/ou la décharge du dispositif de stockage d'énergie (1) sur la base du signal de température corrigé et/ou pour générer un signal d'avertissement lorsqu'une température indiquée par le signal de température dépasse une valeur seuil supérieure pour générer le signal d'avertissement lorsque la température est inférieure à la valeur seuil inférieure.

2. Convertisseur d'urgence selon la revendication 1, comprenant en outre
une source de courant (15) configurée pour fournir un courant au connecteur de capteur (7.1) ; dans lequel
le circuit de commande (5) est configuré pour déterminer le type du dispositif de stockage d'énergie (1) en mesurant la tension au niveau du connecteur de capteur (7.1) et en attribuant un des au moins deux types différents à une valeur de tension mesurée à un moment prédéterminé après que le courant est fourni au connecteur de capteur (7.1) ou à au moins une caractéristique prédéterminée d'une forme d'onde de tension mesurée dans un intervalle de temps prédéterminé après que le courant est fourni au connecteur de capteur (7.1).

3. Convertisseur d'urgence selon l'une quelconque des revendications précédentes, dans lequel
l'au moins un paramètre comporte au moins l'un parmi des paramètres de charge, des paramètres de décharge et des paramètres de défaillance.

4. Convertisseur d'urgence selon l'une quelconque des revendications précédentes, comprenant en outre
un pilote de DEL (9) configuré pour fournir un courant à un dispositif d'éclairage à DEL (3), dans lequel le pilote de DEL (9) est alimenté par le dispositif de stockage d'énergie (1) dans un mode d'éclairage d'urgence ou un mode de test.

5. Dispositif de stockage d'énergie comprenant
des connecteurs (3.1, 3.2, 3.3) configurés pour connecter le dispositif de stockage d'énergie (1) à une interface de stockage d'énergie (7) d'un convertisseur d'urgence (2) ; et
un capteur de température (R_{NTC}) configuré pour générer un signal de température indiquant une température des dispositifs de stockage d'énergie (1),
un circuit de capteur (14) comprenant le capteur de température (R_{NTC})et au moins une résistance (R_{BC}) destinés à générer un signal de type indiquant le type des dispositifs de stockage d'énergie (1), dans lequel le circuit de capteur (14) est connecté aux connecteurs (3.1, 3.2, 3.3) et est configuré pour générer le signal de type dans une première période et le signal de température dans une seconde période suivant la première période, dans lequel
le circuit de capteur (14) comprend un commutateur (Q₁) configuré pour éteindre le capteur de température (R_{NTC}) pendant la première période, et
la résistance (R_{BC}) et le capteur de température (R_{NTC}) sont connectés en série entre deux des connecteurs (3.1, 3.2, 3.3) et le capteur de température (R_{NTC}) est contourné par le commutateur (Q₁) pendant la première période.

6. Dispositif de stockage d'énergie selon la revendication 5, dans lequel
le circuit de capteur (14) comprend un condensateur (C₁) et un diviseur de tension (R₃, R₄) connectés en série entre les deux connecteurs (3.1, 3.2) et le commutateur (Q₁) est commandé par un signal généré par le diviseur de tension (R₃, R₄).

7. Dispositif de stockage d'énergie selon l'une quelconque des revendications 5 et 6, comprenant en outre
une batterie Lithium-ion (11), dans lequel
le capteur de température (R_{NTC}) est configuré pour générer le signal de température indiquant une température de la pile lithium-ion (11).

8. Dispositif de stockage d'énergie selon la revendication 7, dans lequel
la pile lithium-ion (11) est connectée ou peut être connectée en parallèle à un premier connecteur (3.2) et à un deuxième connecteur (3.3) des connecteurs (3.1,3.2, 3.3), et
le circuit de capteur est connecté en parallèle à un troisième connecteur (3.1) des connecteurs et à l'un du premier connecteur (3.2) et du deuxième connecteur (3.3).

9. Procédé permettant de déterminer un type d'un dispositif de stockage d'énergie (1) connecté à un convertisseur d'urgence (2), dans lequel au moins deux types différents de dispositifs de stockage d'énergie, auxquels différents paramètres pour commander le convertisseur d'urgence (2) sont attribués, peuvent être connectés au convertisseur d'urgence (2), le procédé comprenant les étapes consistant à :
détecter (S1..S3) un signal généré par le dispositif de stockage d'énergie (1) ; et
déterminer (S4) le type de dispositif de stockage d'énergie (1) sur la base du signal détecté,
le signal est généré par un circuit de capteur (14) du dispositif de stockage d'énergie (1) comprenant un capteur de température (R_{NTC}) destiné à générer un signal de température indiquant une température du dispositif de stockage d'énergie (1) et au moins une résistance (R_{BC}) destiné à générer un signal de type indiquant le type des dispositifs de stockage d'énergie (1), dans lequel le signal de type est généré dans une première période et le signal de température est généré dans une seconde période suivant la première période ;
dans l'étape de détection (S1..S3), le signal de type est détecté dans la première période ; et
dans l'étape de détermination (S4), le type de dispositif de stockage d'énergie (1) est déterminé sur la base du signal de type, dans lequel le procédé comprend en outre les étapes consistant à
détecter, dans la seconde période, le signal de température reçu par le connecteur de capteur (7.1),
déterminer une erreur du signal de température sur la base du type déterminé du dispositif de stockage d'énergie (1),
corriger le signal de température sur la base de l'erreur déterminée, et
commander la charge et/ou la décharge du dispositif de stockage d'énergie (1) sur la base du signal de température corrigé et/ou générer un signal d'avertissement lorsqu'une température indiquée par le signal de température dépasse une valeur seuil supérieure et/ou générer le signal d'avertissement lorsque la température est inférieur à la valeur seuil inférieure.

10. Procédé selon la revendication 9, dans lequel
dans l'étape de détection (S1..S3), un courant est fourni par le convertisseur d'urgence (1) au circuit de capteur (14) du dispositif de stockage d'énergie (1) ; et
dans l'étape de détermination (S4), le type du dispositif de stockage d'énergie (1) est déterminé en mesurant la tension générée par le circuit de capteur (14) et en attribuant un des au moins deux types différents à une valeur de tension mesurée à un moment prédéterminé après que le courant est fourni au circuit de capteur (14) ou à au moins une caractéristique prédéterminée d'une forme d'onde de tension mesurée dans un intervalle de temps prédéterminé après que le courant est fourni au circuit de capteur (14).

11. Procédé selon la revendication 10, dans lequel
la résistance (R_{BC}) et le capteur de température (R_{NTC}) sont connectés en série ; et
dans l'étape de détection (S1..S3), le capteur de température (R_{NTC}) est contourné par un commutateur (Q₁) connecté en parallèle au capteur de température (R_{NTC}).
